# FASCICULE DE BREVET EUROPEEN

(11) **EP 1 192 056 B1**
(45) Date de publication et mention de la délivrance du brevet: **03.12.2003**
(21) Numéro de dépôt: 00949597.9
(22) Date de dépôt: 30.06.2000
(51) Int. Cl.: B60G 21/05

(54) **SUSPENSION POUR VEHICULE AUTOMOBILE**
RADAUFHÄNGUNG FÜR KRAFTFAHRZEUG
MOTOR VEHICLE SUSPENSION

(30) Priorité: 02.07.1999 FR 9908579
(43) Date de publication de la demande: 03.04.2002
(73) Titulaire: Renault s.a.s., 92100 Boulogne Billancourt (FR)
(72) Inventeur: DOUCERAIN, Thomas, F-72000 Le Mans (FR); BENFARES, Ali, F-92160 Suresnes (FR); PAJOT, Hervé, F-78180 Montigny-le-Bretonneux (FR)
(86) Numéro de dépôt international: FR0001859
(87) Numéro de publication internationale: WO01002199

(56) Documents cités:
- FR-A- 2 502 071
- FR-A- 2 712 534

## Description

La présente invention a pour objet une suspension pour véhicule automobile comportant deux bras longitudinaux reliés par une traverse rigide en flexion et souple en torsion et qui comporte en outre une barre de torsion s'étendant parallèlement à la traverse et qui relie les deux bras.

La publication DE-4110571 décrit un tel train dans lequel la barre de torsion est constituée d'un élément cylindrique, de section circulaire. Cette barre de torsion est fixée par soudage par ses extrémités aux bras de suspension par un cordon de soudure circulaire. Le dévers ainsi que la torsion des bras induisent une concentration des contraintes dans la liaison soudée.

Afin de limiter la concentration des contraintes dans le cordon de soudure, le diamètre des extrémités de la barre peut être choisi plus important que celui de la partie centrale. Cependant, une telle solution est limitée par la hauteur même des bras de suspension et nécessite une opération de formage à chaud des extrémités de la barre.

En outre, une telle barre pleine doit subir un traitement thermique pour augmenter sa résistance aux contraintes dans la zone de transition entre la partie centrale de la barre et chacune des parties terminales. Cette opération de traitement thermique en augmente le coût de fabrication.

Enfin, chaque bras de suspension est percé transversalement pour permettre le passage d'une extrémité de la barre et sa fixation par un cordon de soudure sur le côté extérieur du bras ; ce perçage fragilise le bras ; de plus, l'ensemble du train doit être retourné pour appliquer le cordon de soudure circulaire ou bien la fabrication réclame de coûteux outillage et machine de soudage comportant une torche de soudage dotée d'une tête tournante.

La présente invention se propose de pallier ces inconvénients en proposant une barre de torsion, pleine ou tubulaire, qui puisse être montée en lieu et place d'une barre, pleine ou tubulaire, en offrant les mêmes prestations en terme de raideur de torsion mais dont l'inertie de flexion autour de l'axe de flexion maximale de la barre soit réduit de manière à limiter la rigidité en flexion de la barre autour de cet axe et donc les efforts transmis au cordon de soudure.

A cet effet, l'invention a pour objet une suspension d'automobile du type à bras oscillants longitudinaux selon la revendication 1.

Selon une autre caractéristique de la présente invention, la barre anti-dévers possède une section identique sur toute sa longueur, y compris dans les zones de raccordement aux bras.

Selon une autre caractéristique de la présente invention, la plus grande dimension de la section transversale de la barre anti-dévers se situe dans le plan de la fibre neutre du bras.

Selon une autre caractéristique de la présente invention, la barre anti-dévers présente une section transversale elliptique.

Selon une autre caractéristique de la présente invention, la barre anti-dévers présente une section transversale oblongue.

Selon une autre caractéristique de la présente invention, la section transversale de la barre présente une forme rectangulaire avec rayons de raccordement.

Selon une autre caractéristique de la présente invention, le rayon de raccordement interne entre les faces du rectangle est égal à l'épaisseur du tube.

Selon une autre caractéristique de la présente invention, le rapport entre la plus grande et la plus petite_dimension de la section transversale est compris entre 1 et 3.

Selon une autre caractéristique de la présente invention, le rayon des extrémités semi-circulaires de la section oblongue est égal à l'épaisseur de la barre anti-dévers.

L'invention concerne aussi un procédé d'obtention d'une barre anti-dévers telle que précédemment décrite.

Selon l'invention, la barre anti-dévers est obtenue à partir d'un tube cylindrique.

Selon une autre caractéristique de la présente invention, la barre est obtenue par profilage à partir d'un tube cylindrique.

L'utilisation d'une telle barre permet de réduire de manière significative l'inertie de flexion de la barre anti-dévers autour d'un axe s'étendant dans le sens de la plus grande largeur de la barre tout en conservant une inertie de torsion autour de l'axe longitudinal de la barre sensiblement identique, et donc une raideur de roulis équivalente, à celles résultant de l'utilisation d'un élément cylindrique connu de l'état de l'art. Les contraintes dans les liaisons soudées reliant les bras et la barre s'en trouvent donc réduites de manière significatives.

D'autres caractéristiques et avantages de l'invention apparaîtront mieux à la lecture de la description qui va suivre et en se référant aux figures annexées selon lesquelles :
- les figures 1 à 4 représentent différentes sections transversales de la barre anti-dévers selon l'invention.
- les figures 5 et 7 représentent des vues en coupe longitudinale de la barre anti-dévers selon l'invention au niveau de la jonction de cette dernière avec le bras de suspension.
- la figure 6 est une vue en coupe selon I-I de la figure 5.
- la figure 8 est une vue en coupe selon II-II de la figure 7.

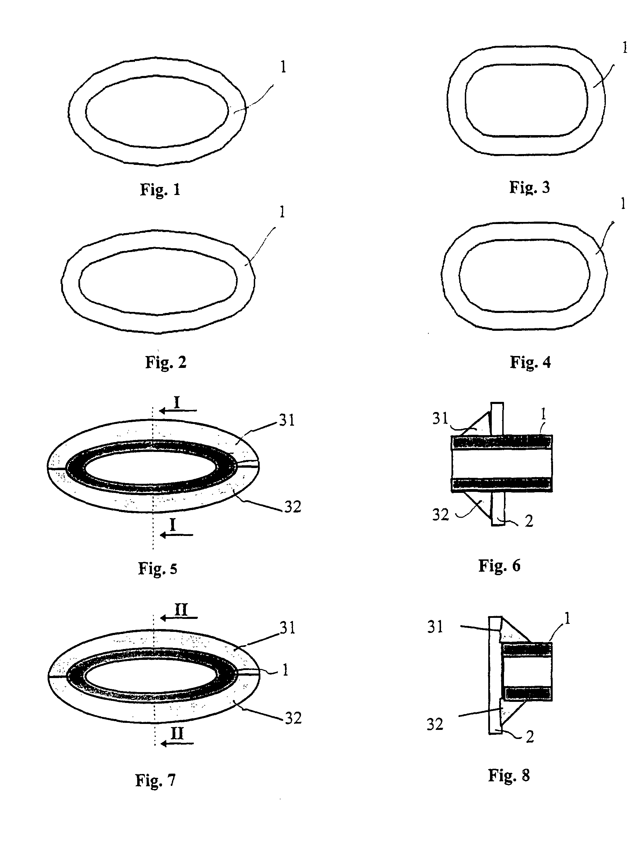

En référence aux figures 1 à 4, diverses sections de la barre anti-dévers susceptibles de convenir sont proposées à titre non limitatif. Ainsi, la section de la barre 1 peut présenter une section aplatie ayant son grand diamètre dans une direction sensiblement parallèle à l'axe longitudinal des bras ; cette section peut notamment être choisie elliptique, oblongue, de type rectangulaire avec rayons de raccordement, ou encore oblongue bombée convexe ; dans ce dernier cas, la section transversale de la barre présente une forme dite bombée, sensiblement en forme de losange, et qui est obtenue à partir d'une section oblongue dont les surfaces planes sont arrondies pour former une section convexe.

Une barre anti-dévers selon l'invention peut notamment être obtenue par écrasement, étirement d'un tube creux ou bien encore par un procédé mettant en oeuvre une opération de type roulé-soudé ; on part dans ce cas d'un ruban d'acier auquel on donne une forme adhoc sur une machine de profilage puis on soude bord à bord les deux rives de sorte d'obtenir un cordon de soudure parallèle à l'axe longitudinal de la barre.

De même, un procédé d'obtention de la barre anti-dévers peut consister soit un étirage, soit un profilage à partir d'éléments tubulaires cylindriques standards.

Si l'on se reporte aux figures 5 à 8, on constate que l'assemblage de la barre 1 sur les bras 2 est réalisé à l'aide de deux cordons de soudure droits (31,32) au lieu d'un cordon circulaire.

Ainsi, la soudure peut être réalisée, comme de manière habituelle, sur l'extérieur du bras 2, la barre anti-dévers 1 traversant ce dernier, ainsi que représenté sur les figures 5 et 6.

La soudure peut aussi être réalisée sur la face intérieure du bras 2 après accostage à angle droit de la barre ainsi que représenté sur les figures 7 et 8 ; il n'est alors plus nécessaire de poinçonner le bras 2, ni de chanfreiner la barre anti-dévers 1.

Parmi les nombreux avantages apportés par la présente invention au regard de l'art antérieur, il convient de signaler d'une part, la suppression de l'opération de formage des extrémités de la barre anti-dévers, d'autre part, la possibilité de fixer chaque extrémité de la barre anti-dévers sur le bras correspondant par deux cordons de soudure, et ce à l'aide de dispositifs simples, au lieu d'un seul cordon circulaire dont l'obtention est plus délicate et nécessite une machine de soudage plus coûteuse.

Bien entendu, l'invention n'est nullement limitée au mode de réalisation décrit et illustré qui n'a été donné qu'à titre d'exemple.

C'est dire que l'invention comprend tous les équivalents techniques des moyens décrits ainsi que leurs combinaisons si celles-ci entrent dans le cadre des revendications qui suivent.

## Revendications

1. Suspension d'automobile du type à bras (2) oscillants longitudinaux dont l'une des extrémités est fixée à la structure du véhicule au moyen d'une articulation élastique et l'autre extrémité supporte l'axe des roues, les deux bras étant reliés par une traverse rigide en flexion et souple en torsion, une barre anti-dévers (1) s'étendant parallèlement à la traverse ayant ses extrémités rigidement fixées sur les bras, et présentant une conformation pleine ou tubulaire, **caractérisée en ce que** l'une des dimensions de la section transversale de la barre anti-dévers est plus importante que l'autre, la plus grande dimension de la section transversale se situant sensiblement dans le plan de la fibre neutre du bras (2).

2. Suspension selon la revendication 1, **caractérisée en ce que** la barre anti-dévers possède une section identique sur toute sa longueur, y compris dans les zones de raccordement aux bras (2).

3. Suspension selon la revendication 1, **caractérisée en ce que** la plus grande dimension de la section transversale de la barre anti-dévers (1) se situe dans le plan de la fibre neutre du bras (2).

4. Suspension selon la revendication 1, **caractérisée en ce que** la barre anti-dévers (1) présente une section transversale elliptique.

5. Suspension selon la revendication 1, **caractérisée en ce que** la barre anti-dévers (1) présente une section transversale oblongue.

6. Suspension selon la revendication 1, **caractérisée en ce que** la section transversale de la barre présente une forme rectangulaire avec rayons de raccordement.

7. Suspension selon la revendication 6, **caractérisée en ce que** le rayon de raccordement interne entre les faces du rectangle soit égal à l'épaisseur du tube.

8. Suspension selon l'une des revendications précédentes, **caractérisée en ce que** le rapport entre la plus grande et la plus petite dimension de la section transversale est compris entre 1 et 3.

9. Suspension selon la revendication 5, **caractérisée en ce que** le rayon des extrémités semi-circulaires de la section oblongue est égal à l'épaisseur de la barre anti-dévers.

10. Procédé de fabrication d'une barre anti-dévers pour une suspension selon l'une des revendications précédentes, **caractérisée en ce que** ladite barre anti-dévers est obtenue à partir d'un tube de section circulaire.

11. Procédé de fabrication d'une barre anti-dévers pour une suspension selon l'une des revendications précédentes, **caractérisé en ce que** la barre anti-dévers est obtenue par profilage d'un tube de section circulaire

## Patentansprüche

1. Aufhängung eines Kraftfahrzeugs von dem Typ mit hin- und herbewegenden, longitudinalen Armen (2), von denen eines ihrer Enden an der Fahrzeugstruktur mittels einer elastischen Anlenkung befestigt ist und das andere Ende die Achse der Räder trägt, wobei die beiden Arme durch einen in Biegung steifen und in Torsion nachgiebigen Querträger verbunden sind, wobei sich ein Gegen-Verwindungsstab (1) parallel zu dem Querträger erstreckt, welcher seine Enden starr an den Armen befestigt hat, und welcher eine massive oder röhrenförmige Gestaltung aufweist, **dadurch gekennzeichnet, dass** die eine der Abmessungen des transversalen Querschnitts des Gegen-Verwindungsstabs größer ist als die andere, wobei die größere Abmessung des transversalen Querschnitts sich im Wesentlichen in der Ebene der neutralen Achse des Arms (2) befindet.

2. Aufhängung nach Anspruch 1, **dadurch gekennzeichnet, dass** der Gegen-Verwindungsstab einen identischen Querschnitt über seine gesamte Länge, einschließlich in den Zonen der Befestigung mit den Armen (2), aufweist.

3. Aufhängung nach Anspruch 1, **dadurch gekennzeichnet, dass** die größte Abmessung des transversalen Querschnitts des Gegen-Verwindungsstabs (1) sich in der Ebene der neutralen Achse des Arms (2) befindet.

4. Aufhängung nach Anspruch 1, **dadurch gekennzeichnet, dass** der Gegen-Verwindungsstab (1) einen transversalen, elliptischen Querschnitt aufweist.

5. Aufhängung nach Anspruch 1, **dadurch gekennzeichnet, dass** der Gegen-Verwindungsstab (1) einen länglichen, transversalen Querschnitt aufweist.

6. Aufhängung nach Anspruch 1, **dadurch gekennzeichnet, dass** der transversale Querschnitt des Stabes eine rechteckige Form mit Befestigungsradien aufweist.

7. Aufhängung nach Anspruch 6, **dadurch gekennzeichnet, dass** der innere Befestigungsradius zwischen den Flächen des Rechtecks gleich der Dicke des Rohres ist.

8. Aufhängung nach einem der vorherigen Ansprüche, **dadurch gekennzeichnet, dass** das Verhältnis zwischen der größten und der kleinsten Abmessung des transversalen Querschnitts zwischen 1 und 3 liegt.

9. Aufhängung nach Anspruch 5, **dadurch gekennzeichnet, dass** der Radius der halbkreisförmigen Enden des länglichen Querschnitts gleich der Dicke des Gegen-Verwindungsstabs ist.

10. Herstellungsverfahren eines Gegen-Verwindungsstabs für eine Aufhängung nach einem der vorherigen Ansprüche, **dadurch gekennzeichnet, dass** der Gegen-Verwindungsstab ausgehend von einem Rohr eines kreisförmigen Querschnitts erhalten wird.

11. Herstellungsverfahren eines Gegen-Verwindungsstabs für eine Aufhängung gemäß einem der vorherigen Ansprüche, **dadurch gekennzeichnet, dass** der Gegen-Verwindungsstab durch Profilierung eines Rohres mit kreisförmigem Querschnitt erhalten wird.

## Claims

1. Automobile suspension of the type having longitudinal oscillating arms (2), one of whose ends is secured to the vehicle structure by means of an elastic articulation and the other of whose ends supports the wheel axle, the two arms being connected by a strut which is rigid in bending and flexible in torsion, an anti-roll bar (1) extending parallel to the strut having its ends rigidly secured to the arms, the anti-roll bar having a solid or tubular configuration, **characterised in that** one of the dimensions of the cross-section of the anti-roll bar is larger than other, the larger dimension of the cross-section being disposed substantially in the plane of the neutral fibre of the arm (2).

2. A suspension as claimed in claim 1, **characterised in that** the anti-roll bar has an identical section over its entire length, including in the zones of connection to the arms (2).

3. A suspension as claimed in claim 1, **characterised in that** the larger dimension of the cross-section of the anti-roll bar (1) is in the plane of the neutral fibre of the arm (2).

4. A suspension as claimed in claim 1, **characterised in that** the anti-roll bar (1) has an elliptical cross-section.

5. A suspension as claimed in claim 1, **characterised in that** the anti-roll bar (1) has an oblong cross-section.

6. A suspension as claimed in claim 1, **characterised in that** the cross-section of the bar is of rectangular shape with connection radii.

7. A suspension as claimed in claim 6, **characterised in that** the inner connection radius between the surfaces of the rectangle is equal to the thickness of the tube.

8. A suspension as claimed in one of the preceding claims, **characterised in that** the ratio between the smaller and the larger dimension of the cross-section is between 1 and 3.

9. A suspension as claimed in claim 5, **characterised in that** the radius of the semi-circular ends of the oblong section is equal to the thickness of the anti-roll bar.

10. A method for the production of an anti-roll bar for a suspension as claimed in one of the preceding claims, **characterised in that** this anti-roll bar is obtained from a tube of circular cross-section.

11. A method for the production of an anti-roll bar for a suspension as claimed in one of the preceding claims, **characterised in that** this anti-roll bar is obtained by profiling of a tube of circular cross-section.
